**Europäisches Patentamt**

**European Patent Office**

**Office européen des brevets**

(19)

(11) Veröffentlichungsnummer: **0 116 132**
**A1**

(12) # EUROPÄISCHE PATENTANMELDUNG

(21) Anmeldenummer: **83111691.8**

(22) Anmeldetag: **23.11.83**

(51) Int. Cl.³: **B 29 F 1/06**

(30) Priorität: **11.01.83 DE 3300652**

(43) Veröffentlichungstag der Anmeldung:
**22.08.84 Patentblatt 84/34**

(84) Benannte Vertragsstaaten:
**AT BE CH DE FR GB IT LI LU NL SE**

(71) Anmelder: **Pharma Gummi Wimmer West GmbH**
**Stolberger Strasse 21-27**
**D-5180 Eschweiler(DE)**

(72) Erfinder: **Wimmer, Hans**
**Am Adamshäuschen 13**
**D-5100 Aachen(DE)**

(74) Vertreter: **Schmitt, Hans, Dipl.-Ing. et al,**
**Dreikönigstrasse 13**
**D-7800 Freiburg(DE)**

(54) **Spritzpresse sowie Verfahren zum Herstellen von Spritzgussteilen.**

(57) Eine Spritzpresse (1) weist für zwei Formen einen gemeinsamen Angußblock (5) mit Zuführeinrichtung (4) u. dgl. für das Spritzmaterial auf. Dieser Angußblock (5) ist zwischen zwei jeweils Spritzgießformen (2 a, 3 a) tragenden Formträgern (2, 3) angeordnet. Die Formträger (2, 3) sowie ein Widerlager (11) sind mit einer gemeinsamen Längsführung (8) verbunden, wobei an den Enden der Führung (8) das Widerlager (11) und der Formträger (3) fest mit dieser Führung verbunden sind, während der Formträger (2) verschiebbar gelagert ist. Durch diese Anordnung kommt man für den Schließ- und Öffnungsvorgang der Spritzgießformen mit einer Hubeinheit aus.

Gegebenenfalls kann der Formträger (3) fest und der andere Formträger (2) sowie der Angußblock (5) dazu bewegbar sein. Weiterhin besteht auch die Möglichkeit, daß der Angußblock feststehend und die beiden Formträger über separate Schließeinheiten dazu bewegbar sind.

Fig. 1

Croydon Printing Company Ltd.

PATENTANWÄLTE
DIPL.-ING. H. SCHMITT
DIPL.-ING. W. MAUCHER

Firma
Pharma-Gummi
Wimmer West GmbH
Stolberger Straße 21 - 27
5180 Eschweiler

UNSERE AKTE - BITTE STETS ANGEBEN!

E 83 409 S

Spritzpresse sowie Verfahren zum Herstellen von Spritzgußteilen

Die Erfindung betrifft eine Spritzpresse mit Formträgern
für eine schließbare Spritzgußform sowie einer Zuführeinrichtung und einem Verteilerraum od. dgl. für Spritzmaterial, wobei die Spritzpresse zur Verarbeitung von
plastischen Spritzmassen, insbesondere aus vulkanisierbarem Material, sowie vorzugsweise zur Herstellung von
einer Vielzahl von gleichen Teilen dient. Derartige
Spritzpressen sind in verschiedenen Ausführungsformen
bereits bekannt und haben sich im praktischen Betrieb
auch weitgehend bewährt.

Um das Verhältnis des umgebenden Aufwandes bei solchen
Spritzpressen einschließlich Bedienungspersonal zur
Menge der mit dieser Spritzpresse in einem Spritzvorgang hergestellten Spritzteile möglichst günstig zu gestalten, ist die Spritzgußform zur gleichzeitigen Herstellung insbesondere einer Vielzahl von Spritzlingen
ausgebildet. Dem sind jedoch insbesondere durch die dann
entsprechend große Ausbildung der Formen und auch durch
die sich ergebenden notwendigerweise langen Zuführwege
für das Spritzmaterial Grenzen gesetzt.

/2

Man hat deshalb auch schon Spritzpressen geschaffen, bei denen mehrere Formplatten od. dgl. hintereinander angeordnet sind. Dabei ist aber ein Materialtransport zumindest durch eines der Formteile mit dem entsprechenden Platzbedarf erforderlich, der dann für die einzelnen Formen in dieser Platte nicht mehr zur Verfügung steht. Außerdem ist dabei unter Umständen nicht sichergestellt, daß die Materialzuführung zu den einzelnen Platten etwa gleichmäßig erfolgt, so daß zur Vermeidung dieses Nachteiles gegebenenfalls aufwendige Zusatzmaßnahmen getroffen werden müssen.

Aufgabe der vorliegenden Erfindung ist es, eine Spritzpresse der eingangs erwähnten Art zu schaffen, bei der der Aufwand insbesondere im Vergleich zur Menge der damit pro Spritzvorgang herstellbaren Teile und gegebenenfalls auch der personelle Bedienungsaufwand wesentlich verringert ist.

Zur Lösung dieser Aufgabe wird erfindungsgemäß insbesondere vorgeschlagen, daß die Spritzpresse Formträger für zwei schließbare Spritzgußformen mit einer dazwischen befindlichen, gemeinsamen Zuführeinrichtung u. dgl. aufweist.

Der Gesamtaufwand ist dadurch insbesondere gegenüber "Einfach"-Pressen wesentlich reduziert, da praktisch die doppelte Anzahl von Spritzlingen pro Spritzvorgang herstellbar sind, ohne daß die Zusatzaggregate, insbesondere die Zuführeinrichtung u. dgl. mehrfach vorhanden sein müßte. Gegenüber Pressen mit hintereinander geschalteten Formplatten und Durchführung des Spritzmateriales durch eine von diesen, ergibt sich einerseits insbesondere der Vorteil, daß beide Spritzgußformen in ihrer Gesamtfläche für Formen zur Verfügung stehen und damit wesentlich besser ausgenützt sind und daß auch die Zuführung des Spritzmateriales wesentlich günstiger ist, wobei die Zuführung zu den beiden Spritzgußformen sehr kurz und bedarfsweise auch etwa gleich gehalten werden kann. Auch sind bei dieser erfindungsgemäßen Ausbildung nur einfachkalibrige Formen notwendig.

Eine Ausführungsform der Erfindung sieht vor, daß der zwischen den beiden gegeneinander arbeitenden Spritzgußformen angeordnete Angußblock od. dgl. feststehend und die Formträger mit den Spritzgußformen dazu bewegbar sind. Diese Ausführungsform mit feststehendem Mittelteil bzw. Angußblock ist u. a. vorteilhaft, wenn die Materialzuführung starr mit dem Angußblock verbunden ist. Außerdem ergeben sich konstruktive Vorteile, da sich die leichteren Spritzgußformen besser für das Öffnen und Schließen führen und bewegen lassen.

Eine wesentliche Weiterbildung der Erfindung sieht vor, daß die beiden beweglichen Formträger auf einer gemeinsamen Längsführung gelagert sind, wobei diese selbst in Führungsrichtung verschiebbar ist und an einem Ende fest mit dem einen Formträger und über wenigstens einen Hubzylinder od. dgl. Hubeinrichtung mit dem anderen Formträger in Verbindung steht. Man kommt dadurch für das Schließen und Öffnen beider Spritzgußformen mit einer einzigen einseitig angreifenden Hubeinrichtung aus, so daß die Konstruktion insgesamt wesentlich vereinfacht ist.
Zweckmäßigerweise ist dabei die Längsführung längsverschieblich beim feststehenden Angußblock od. dgl. gelagert, vorzugsweise innerhalb dieses feststehenden Angußblockes. Der gesamte Aufbau der Spritzpresse ist dadurch kompakt und außerdem können dadurch auch zusätzliche Längsführungen bzw. Halterungen für die gemeinsame Längsführung entfallen.

/4

Vorteilhafterweise greift die mit dem auf der Längsführung verschiebbaren Formträger verbundene Hubeinrichtung mit ihrem anderen Ende an einem fest mit der Längsführung verbundenen Widerlager an. Beim Betätigen der Hubeinrichtung bewegt sich zumindest einer der Formträger mit Spritzgußform auf den Angußblock zu, bis sich zumindest die eine Form beim Angußblock anlegt und dann ein Widerlager bildet, durch das bei weiteren Betätigen der Hubeinrichtung auch die andere Spritzgußform sich zum Angußblock hin bewegt und dort in eine Vorarbeitsstellung gelangt.

Nach einer Weiterbildung der Erfindung weist die Hubeinrichtung eine zweckmäßigerweise hydraulische Schnellvorschubeinrichtung sowie eine insbesondere einen kurzen Arbeitshub aufweisende, vorzugsweise hydraulische Hochdruckvorschubeinrichtung auf. Mit der Schnellvorschubeinrichtung ist dabei ein schnelles Öffnen und auch Verfahren der Spritzgußformen in eine Vor-Schließstellung möglich, während die Hochdruckvorschubeinrichtung für den erforderlichen Preßdruck sorgt.

Vorzugsweise sind die Formenträger mittels der Schnellvorschubeinrichtung in eine nahe der Einspritzstellung befindliche Dichtstellung verschiebbar, wobei für diese Dichtstellung vorzugsweise verstellbare Anschläge vorgesehen sind. Auch dadurch läßt sich die Hubeinrichtung und die Längsführung besonders einfach ausgestalten, da durch die den ersten Vorschub in Dichtstellung begrenzenden Anschläge ein synchrones gleichzeitiges Verfahren der Spritzgußformen nicht erforderlich ist.

Die Erfindung betrifft auch ein Verfahren zum Herstellen von Spritzgußteilen, bei dem die plastische Spritzmasse für einen Spritzvorgang mengenmäßig dosiert sowie in

/5

einem fließfähigen Zustand bereitgehalten wird und nach einem ersten Schließen gegebenenfalls ein Evakuieren einer Form und anschließend ein Einspritzen der Spritzmasse durch Verfahren der Form in die Endstellung erfolgt, vorzugsweise zum Herstellen einer Vielzahl von gleichen Teilen, insbesondere mittels der erfindungsgemäßen Spritzpresse. Dieses Verfahren ist erfindungsgemäß insbesondere dadurch gekennzeichnet, daß bei jedem Arbeitstakt zumindest die Spritzmasse für zwei Spritzformen bereitgestellt und dann mengenmäßig entsprechend dem Formvolumen aufgeteilt in entgegengesetzten Richtungen in die Formen eingespritzt wird. Besonders vorteilhaft ist dabei, daß die mengenmäßige Aufteilung entsprechend dem Formvolumen der beiden Spritzgußformen praktisch selbständig erfolgt, da die bereitgestellte Spritzmasse bei Druckbeaufschlagung gleichzeitig zu beiden Spritzgußformen Zugang hat. Es ist somit praktisch nur erforderlich, die Gesamtmasse des zum Füllen zur Verfügung stehenden Materiales ausreichend zu bemessen. Es besteht somit die Möglichkeit, in den beiden Spritzgußformen auch unterschiedliche Spritzkörper herzustellen.

Zusätzliche Ausgestaltungen der Erfindung sind in den weiteren Unteransprüchen aufgeführt. Nachstehend ist die Erfindung mit ihren wesentlichen Einzelheiten anhand der Zeichnung noch näher erläutert.

Es zeigt zum Teil stärker schematisiert:

Fig. 1    eine Seitenansicht einer Spritzpresse in Offenstellung,

Fig. 2    eine Stirnseitenansicht der in Fig. 1 gezeigten Spritzpresse,

/6

Fig. 3    ein Funktionsschema insbesondere einer Hubeinrichtung der Spritzpresse,

Fig. 4    die in Fig. 1 gezeigte Spritzpresse mit einseitig in Dichtstellung befindlicher Spritzgußform,

Fig. 5    die in Fig. 1 und 4 gezeigte Spritzpresse in
          Dicht- bzw. Spritzstellung,

Fig. 6    eine zum Teil im Schnitt gehaltene Teilseitenansicht im Bereich von Anschlägen für die Dichtstellung der Spritzgußformen,

Fig. 7    eine etwa mit Fig. 6 vergleichbare Ansicht,
          hier jedoch mit verschobenen Anschlägen,

Fig. 8    eine Seitenansicht der in Fig. 1 gezeigten
          Spritzpresse in einseitiger Offenstellung,

Fig. 9    eine schematische Aufsicht von zwei bzw. vier
          gegenüberliegend angeordneten Spritzpressen,

Fig. 10   eine horizontale Querschnittsdarstellung gemäß
          der Schnittlinie X-X in Fig. 11 im Bereich des
          Angußblockes,

Fig. 11   eine Seitenansicht eines Angußblockes,

Fig. 12
und 13    eine Seitenansicht bzw. eine Aufsicht einer
          abgewandelten Ausführungsform einer erfindungsgemäßen Spritzpresse und

Fig. 14
und 15    eine Seitenansicht sowie eine Aufsicht einer

/7

wiederum abgewandelten Ausführungsform einer erfindungsgemäßen Spritzpresse.

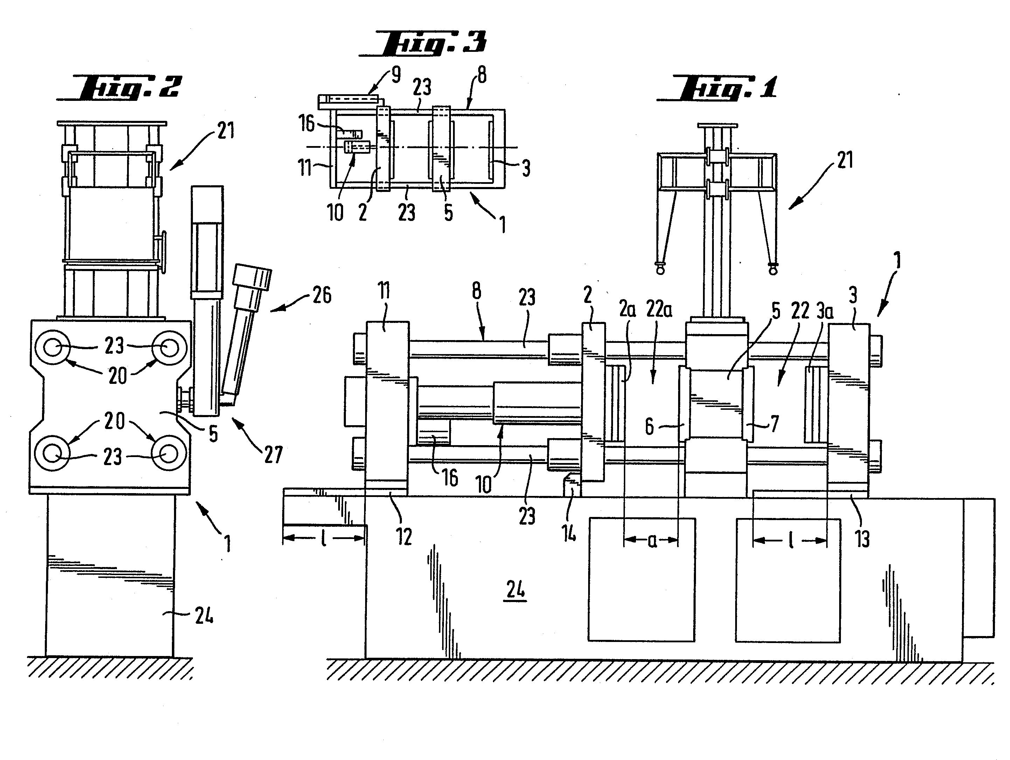

Eine Spritzpresse 1 (Fig. 1) ist im wesentlichen als Doppelpresse mit zwei Spritzgußformen 2 a, 3 a sowie einem dazwischen angeordneten Angußblock 5 ausgebildet. Die erfindungsgemäße Spritzpresse 1 dient insbesondere zur Verarbeitung von plastischen Spritzmassen, insbesondere aus vulkanisierbarem Material. Die beiden Spritzgußformen 2 a, 3 a sind an Formträgern 2, 3 befestigt, die ihrerseits relativ zum Angußblock 5 hin verschiebbar gelagert sind. In den Ausführungsbeispielen gemäß Fig. 1 bis 8 ist der zwischen den beiden gegeneinander arbeitenden Spritzgußformen 2 a, 3 a angeordnete Angußblock 5 feststehend und die Formträger 2, 3 mit den Spritzgußformen 2 a, 3 a dazu bewegbar.

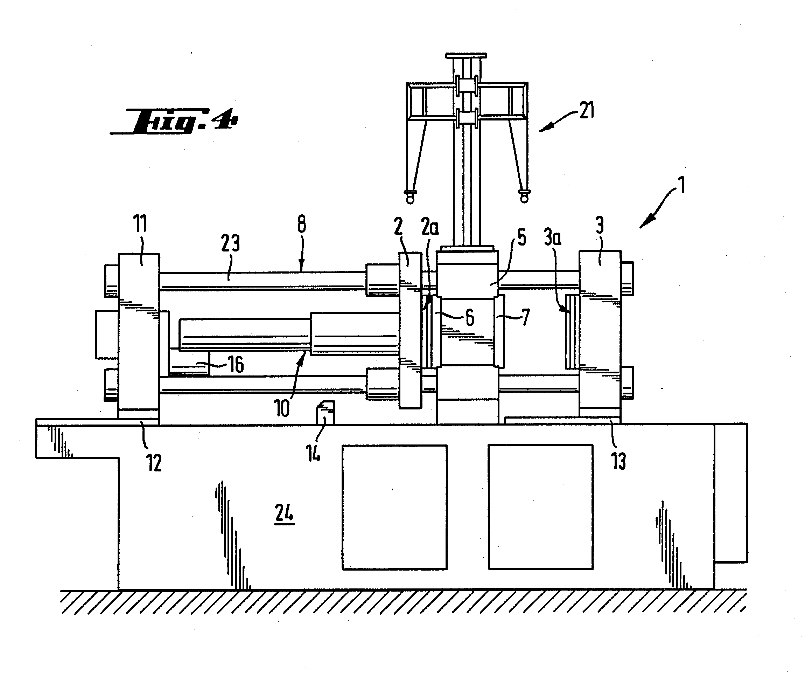

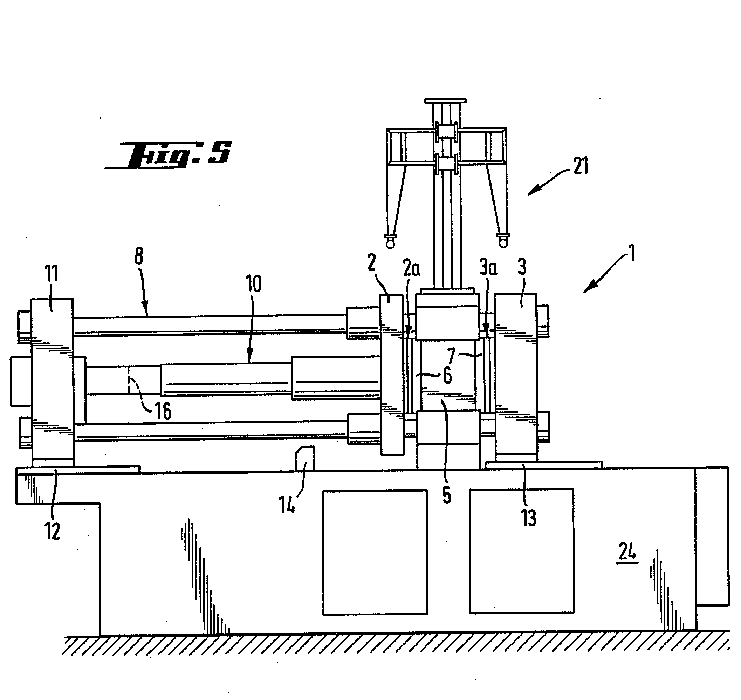

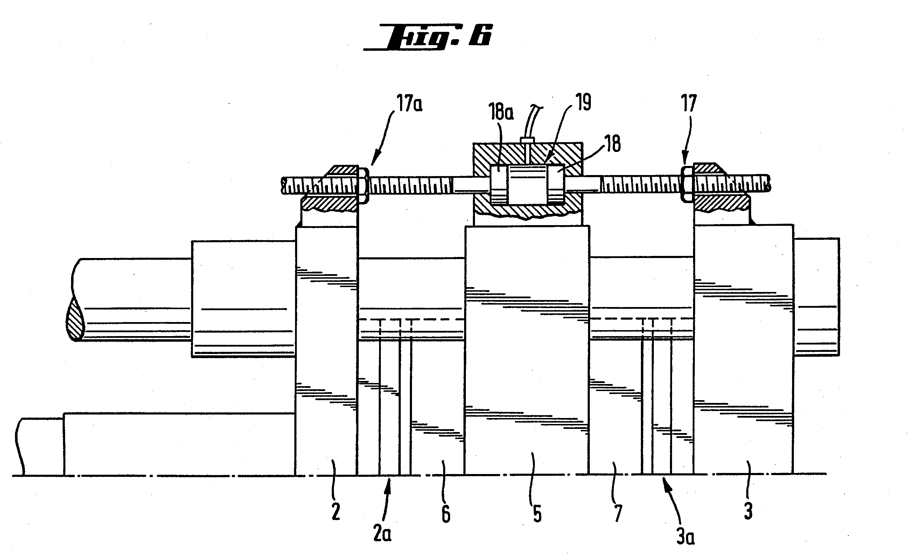

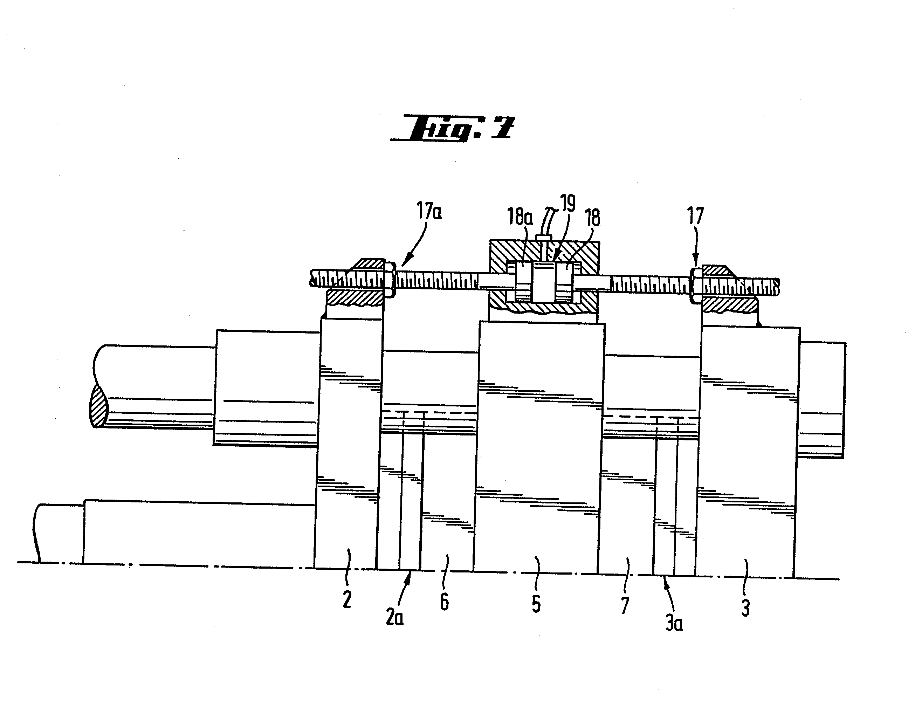

Die beiden Formträger sind auf einer gemeinsamen Längsführung 8 (vgl. auch Fig. 3) gelagert, wobei diese selbst in Führungsrichtung verschiebbar ist und an einem Ende fest mit dem einen Formträger 3 und über eine Hubeinrichtung 9, 10 mit dem anderen Formträger 2 verbunden ist. Im Ausführungsbeispiel ist die gesamte Längsführung 8 längsverschieblich beim feststehenden Angußblock 5 gelagert, der dazu Führungsbuchsen 20 (vgl. Fig. 2) aufweist. In Fig. 3 ist das Funktionsprinzip zum Öffnen und Schließen beider Spritzgußformen 2 a, 3 a gut erkennbar. Die Längsführung 8 bildet insgesamt praktisch einen geschlossenen Rahmen, der in Längsrichtung Führungsstangen 23, an der einen Stirnseite den Formträger 3 und am anderen Ende ein Widerlager 11 für die Hubeinrichtung aufweist. Dieser gesamte Rahmen ist relativ zum Angußblock 5 längsverschiebbar.

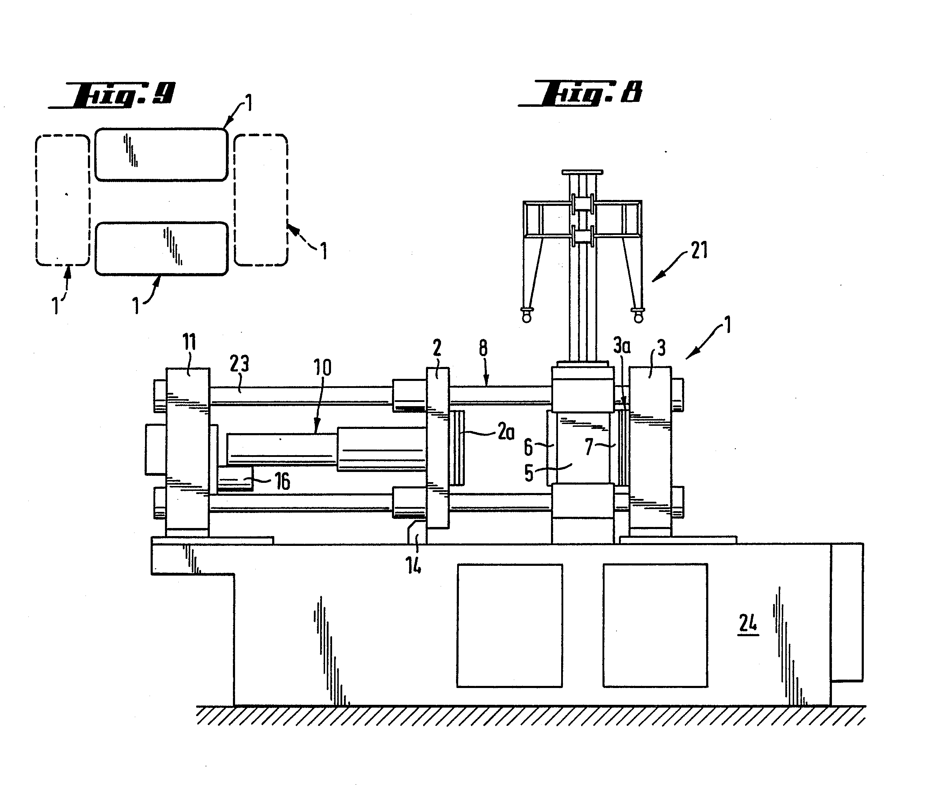

Wird nun die Hubeinrichtung 9 bzw. 10 betätigt, so wird der Formträger 2 zum Angußblock 5 hin bewegt, wobei er durch die Führungsstangen 23 geführt ist. Kommt er dort, wie in Fig. 4 gezeigt, zur Anlage an seiner zugehörigen Angußplatte 6 bzw. an einem noch zu beschreibenden Anschlag 17 a, so bildet dieser anliegende Formträger 2 ein Widerlager, an dem sich über die Hubeinrichtung 9 oder 10 der gesamte Rahmen (Längsführung 8) abstützt. Dadurch verschiebt sich dieser insgesamt, so daß der Formträger 3 nun ebenfalls zum Angußblock 5 hin bewegt wird. Durch diese konstruktive Ausbildung kommt man für zwei Spritzgußformen mit einer Hubeinrichtung 9, 10 aus.

Das Widerlager 11 sowie der Formträger 3 sind durch Stützlager 12, 13 gelagert, auf denen sie die vorbeschriebene Verschiebebewegung durchführen können. Der Längsverschiebeweg l ist jeweils bei den Stützlagern 12, 13 gleich lang und entspricht auch etwa dem größtmöglichen Öffnungsabstand a der Formträger 2, 3 von dem Angußblock 5. Dagegen ist der Arbeitshub der Hubeinrichtung 9, 10 mindestens etwa doppelt so groß wie der größtmögliche Öffnungsabstand a.

Der Schließvorgang ist in seinen unterschiedlichen Phasen in Fig. 1, 4 und 5 erkennbar. Erwähnt sei hierbei, daß sich die Reihenfolge des Schließens der Spritzgußformen 2 a bzw. 3 a unterschiedlich, z. B. wegen verschiedener Reibungskräfte ergeben kann.

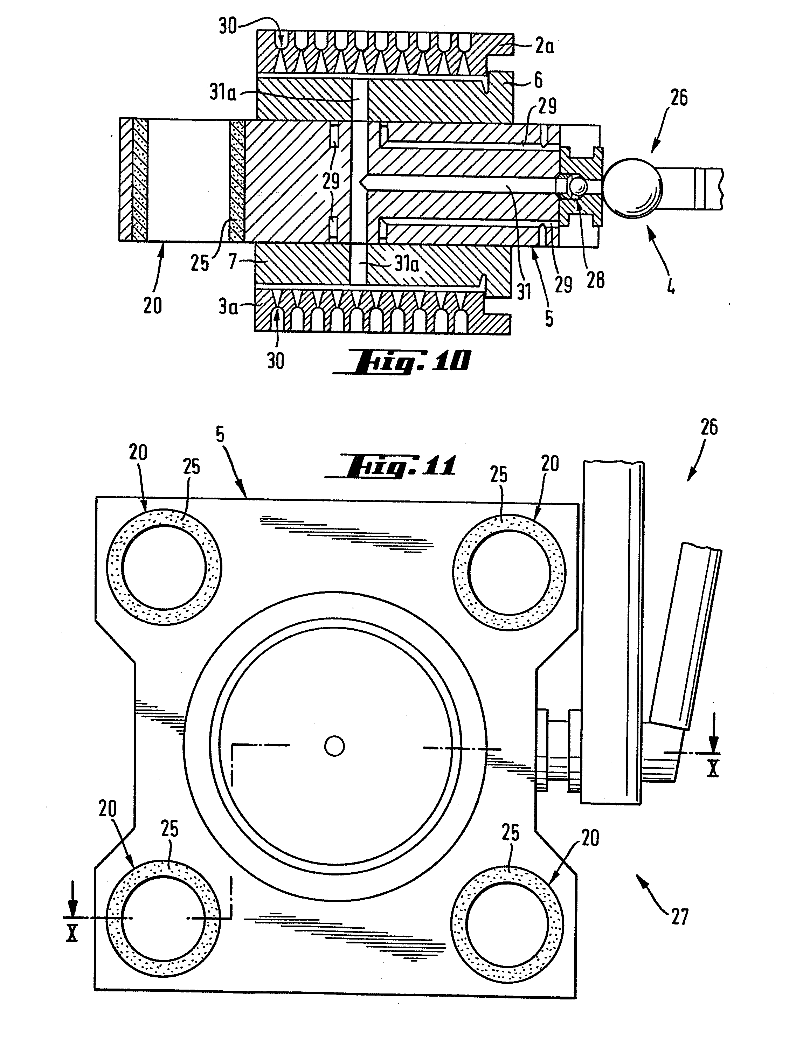

Für den Spritzvorgang selbst ist dies jedoch weitestgehend ohne Bedeutung. Bei etwa gleichen Reibungswerten kann auch ein zumindest abschnittweise gleichzeitiges Schließen der beiden Spritzgußformen erfolgen. In der Offenstellung gemäß Fig. 1 befinden sich der Formträger 3 sowie das Widerlager 11 in einer nach rechts verschobenen Endstellung. Der Formträger 2 liegt an einem in seiner Funktionsweise noch näher zu beschreibenden Anschlag 14 an. Wird nun die Hubeinrichtung betätigt, so erfolgt ein Verschieben der Formträger 2, 3 zum Angußblock 5 hin. Hier ist in Fig. 4 dargestellt, daß sich

zunächst der Formträger 2 in Dichtstellung begibt, während der Formträger 3 durch Verfahren der gesamten Längsführung 8 anschließend in Dichtstellung gelangt, wobei der beim feststehenden Angußblock 5 anliegende Formträger 2 als Abstütz-Widerlager dient. In Fig. 5 ist in der dargestellten Schließ- bzw. Dichtstellung gut erkennbar, daß das Widerlager 11 und der Formträger 3 auf ihren Stützlagern 12 und 13 nach links verschoben sind.

Die Hubeinrichtung weist zweckmäßigerweise eine hydraulische Schnellvorschubeinrichtung 9 (Fig. 3) sowie eine insbesondere einen kurzen Arbeitshub aufweisende, vorzugsweise hydraulische Hochdruckvorschubeinrichtung 10 auf (vgl. Fig. 1). Die Schnellvorschubeinrichtung 9 dient dabei zum Verfahren der beiden Formträger 2, 3 im wesentlichen über den Verschiebeweg a bei jeder Spritzgußform, während die Hochdruckvorschubeinrichtung einen kurzen Hub bei hohen Druckkräften für den Prägespritzvorgang aufweist. Für das getrennte Arbeiten der beiden Hubeinrichtungen 9, 10 mit jeweils unterschiedlichem Hub- und auch Arbeitsdruck ist ein einschwenkbarer Widerlagerblock 16 zum Abstützen der Hochdruckvorschubeinrichtung 10 vorgesehen. In den Fig. 1 und 4 ist dieser Verschiebeblock 16 ausgeschwenkt und in Fig. 5, wo sich die beiden Formträger bzw. die Spritzgußformen zumindest in Dichtstellung befinden, in eingeschwenkter Lage dargestellt. Durch diesen Widerlagerblock 16 ergibt sich insbesondere ein einfacher Aufbau und auch ein einfaches Arbeiten der Hochdruckvorschubeinrichtung. Beim Öffnen der Spritzpresse zieht die Hubeinrichtung die Spritzgußformen 2 a, 3 a von den zugehörigen Angußplatten 6, 7 am Angußblock 5 weg. In Fig. 8 ist gezeigt, daß sich hier zunächst der Formträger 2 zurückbewegt hat, bis er an einem Öffnungsanschlag 14 anliegt. In dieser Lage bildet der in die eine Richtung gegen den Öffnungsanschlag

14 festgelegte Formträger 2 ein Widerlager für den weiteren Öffnungsvorgang, wo sich der Formträger 3 mit der Spritzgußform 3 a vom Angußblock 5 entfernt. Beim weiteren Zusammenfahren der Vorschubeinrichtung wird die gesamte Längsführung 8 mit Widerlager 11 und Formträger 3 nach rechts bis in die in Fig. 1 gezeigte Offenstellung verfahren.

Bei der erfindungsgemäßen Spritzpresse 1 wird bevorzugt ein sogenanntes Prägespritzverfahren angewandt, bei dem durch das Einfahren der Spritzgußformen 2 a, 3 a in die zugehörigen Angußplatten 6, 7 der notwendige Spritzdruck erzeugt wird. Die Anpreßkraft wird hier durch die Hochdruckvorschubeinrichtung 10 erbracht. Fig. 10 zeigt in einer in unterschiedlichen Höhenlagen gezeigten Querschnittsdarstellung den Angußblock 5 mit den Angußplatten 6 und 7 sowie den an diese herangefahrenen Spritzgußformen 2 a und 3 a in Aufsicht. Diese Spritzgußformen sind insgesamt etwa kolbenartig ausgebildet und können in die Angußplatten 6, 7 axial etwas verschiebbar einrücken. Das zwischen den sich gegenüberliegenden Oberflächen der Spritzgußformen einerseits und der Angußplatten andererseits befindliche Spritzmaterial wird beim Zusammenfahren der Formteile in die Angußstellen 30 verdrängt.
Die Zuführung des Spritzmateriales erfolgt von einer Einspritzeinheit 26 und durch Kanäle 31, 31 a. Im Zuführweg ist noch ein Rückschlagventil 28 vorgesehen, durch das beim Zusammenfahren der Formteile ein Ausweichen des Spritzmateriales in Richtung zur Einspritzeinheit 26 hin vermieden wird. In Fig. 10 ist auch gut erkennbar, daß zwischen den Formen 2 a/6 und 3 a/7 ein ungehinderter Materialfluß möglich ist, da die Formen durch den Querkanal 31 a miteinander verbunden sind.
Gegebenenfalls vorhandene ungleiche Materialverteilungen können damit ausgeglichen werden und es erfolgt somit zwangsläufig eine vollständige Füllung gleichzeitig beider Formen. Ein wesentlicher Vorteil bei der erfindungsgemäßen Spritzpresse 1 ist noch, daß die Formen auch unterschiedliche Mengen an Materialfüllung haben können, z. B. durch unterschiedliche, herzustellende Spritzlinge. Es muß dabei nur darauf geachtet werden, daß die Gesamtmasse des zum Füllen zur Verfügung stehenden Materiales ausreichend ist. Durch die erfindungsgemäße Ausbildung der Spritzpresse kann auch die Dosiergenauigkeit der Einspritzeinheit geringer sein, weil sich die Toleranzmenge des pro Schuß verarbeiteten Materialvolumens auf eine insgesamt größere, praktisch doppelte Menge von Spritzmaterial bezieht.

Beim Spritzprägen werden die Spritzgußformen zunächst in einen nahe der Einsprützstellung befindliche Dichtstellung verschoben, wobei diese Dichtstellung durch Anschläge 17, 17 a (Fig. 6 und 7) einstellbar ist. Die Anschläge 17, 17 a sind mit Kolben 18, 18 a verbunden, die in einem Anschlagzylinder 19 geführt sind. Für die der Dichtstellung entsprechende Anschlagstellung sind beide Kolben 18, 18 a innerhalb des Anschlagzylinders 19 durch Hydraulikmedium druckbeaufschlagt. Diese Anschlagstellung ist in Fig. 6 wiedergegeben. Wird nun der Anschlagzylinder 19 drucklos gemacht, so können die Kolben 18, 18 a zueinander verfahren werden, wobei diese Schließbewegung nach dem Einschwenken des Widerlagerblockes 16 (Fig. 5) durch die Hochdruckvorschubeinrichtung 10 erfolgt.

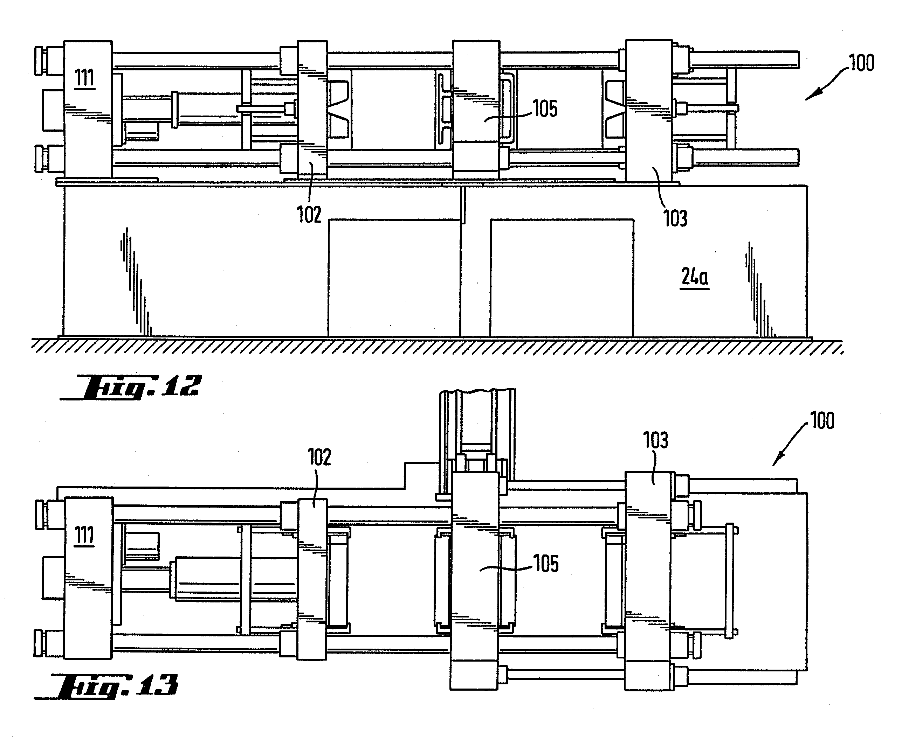

In den Fig. 10 und 11 ist noch erkennbar, daß zur Temperierung der innerhalb des Angußblockes 5 befindlichen Materialzuführkanäle 31, 31 a Temperierkanäle 29 vorgesehen sind. Die Führungsstangen 23 der Längsführung 8 sind innerhalb des Angußblockes 5 geführt (vgl. auch Fig. 11), wobei in dem Angußblock Führungsbuchsen 20 vorgesehen sind. Diese weisen thermische Isolierungen 25 auf (Fig. 10), durch die eine Wärmeübertragung vom Angußblock 5 auf die Längsführung 8 reduziert wird.

Die Figuren 2, 10 und 11 lassen besonders gut erkennen, daß die Einspritzeinheit 26 zu dem Verteilerraum od.dgl. bei dem Angußblock 5 an dessen Rückseite 27 angeordnet ist. Bei dem vorbeschriebenen Ausführungsbeispiel einer Spritzpresse 1 ist die Materialzuführung 4 mit Einspritzeinheit 26 u. dgl. zweckmäßigerweise fest an Angußblock 5 angebracht.

Etwa oberhalb des Angußblockes 5 u. dgl. befindet sich noch eine Doppel-Entformvorrichtung 21, die in Offenstellung der Spritzpresse in die Freiräume 22 bzw. 22 a zwischen den Angußplatten und den Spritzgußformen eingreifen kann. Nach dem Öffnen der Maschine können somit gleichzeitig Auswerfereinrichtungen bei den Formen eingreifen und die Spritzlinge entfernen. Unterhalb der Formbereiche können noch hier nicht dargestellte Auffangeinrichtungen, Abtransportvorrichtungen u. dgl. angeordnet sein. Die Spritzpresse 1 ist auf einem Maschinengestell 24 befestigt.

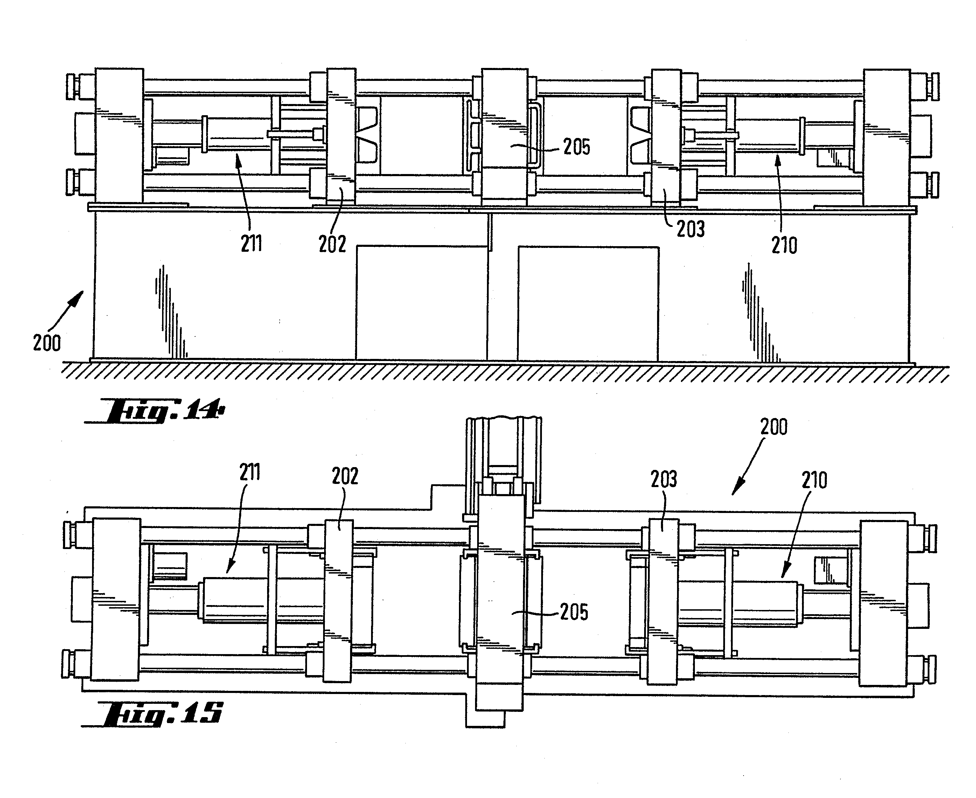

Die Fig. 12 und 13 zeigen eine abgewandelte Ausführungsform einer erfindungsgemäßen Spritzpresse 100, die ebenfalls wie die vorbeschriebene Spritzpresse 1 mit einer Vorschubeinheit 111 arbeitet und bei der im Gegensatz zu der Spritzpresse 1 der eine Formträger 103 feststehend und der andere Formträger 102 sowie der Angußblock 105 beweglich gelagert sind. Prinzipiell ist der Aufbau insbesondere auch der Führung vergleichbar mit der bei der Spritzpresse 1, wobei hier jedoch zunächst beim Betätigen der Vorschubeinrichtung der Formträger 102 zum Angußblock 105 bewegt wird und diesen dann bei Anlage mitnimmt und gegen den anderen Formträger 103 verfährt. Bei dieser Ausführungsform ist somit die Folge der Bewegungen fest vorgegeben.

Eine wiederum abgewandelte Ausführungsform einer erfindungsgemäßen Spritzpresse 200 zeigen die Fig. 14 und 15. Hierbei ist der Angußblock 205 feststehend und die beiden Formträger 202 und 203 dazu verschiebbar angeordnet, wobei für jede Spritzgußform eine separate, insbesondere hydraulische Schließeinheit 210 und 211 vorgesehen ist. Insbesondere bei dieser Ausführungsform besteht auch gegebenenfalls die Möglichkeit, eine Form der Maschine im Bedarfsfalle stillzusetzen und z. B. bei Kleinserien nur eine Form arbeiten zu lassen.

Bei einer Ausführungsform mit bewegbarem Angußblock 105 (z. B. Fig. 12, 13) kann die Materialzuführung fest am Angußblock 105 angebracht sein und dessen Verschiebebewegung mitmachen. Andererseits besteht bei diesem Angußblock 105 aber auch die Möglichkeit, daß die Einspritzeinheit 26 justierbar am Maschinengestell 24 a angebracht ist und eine Kupplungsstelle für einen intermittierenden Anschluß an den Angußblock aufweist. Dabei wird jedes Mal in einer bestimmten Stellung des Angußblockes die Einspritzeinheit angekuppelt, um die vorgesehene Spritzmaterial-Menge einzugeben.

Der Überwachungsbereich für eine Bedienperson ist bei der erfindungsgemäßen Spritzpresse räumlich so klein, daß ohne Schwierigkeiten auch beide Formen praktisch gleichzeitig überwacht werden können. Durch diese Vereinfachung für die Bedienperson, trotz praktisch Verdoppelung der Produktion, besteht auch die Möglichkeit, daß zwei erfindungsgemäße Spritzpressen gegenüberliegend angeordnet und ebenfalls von einer einzigen Bedienperson überwacht werden können. Dies ist in Fig. 9 schematisch angedeutet. Unter Umständen lassen sich auch mehr als zwei solcher Spritzpressen in einem Arbeitsbereich anordnen, wie dies strichliniert noch angedeutet ist.

Erwähnt sei noch, daß die Spritzgußformen in ihrer Dichtstellung vor dem eigentlichen Spritzpressen evakuiert werden. Insgesamt ist bei der erfindungsgemäßen Spritzpresse der apparative Aufwand gegenüber sonst zwei solcher Pressen mit insgesamt gleicher Kapazität wesentlich geringer, so daß insgesamt eine kostengünstigere Herstellung möglich ist. Dies ergibt sich insbesondere auch dadurch, daß man mit einer Spritzeinheit und einer Vorschubeinheit auskommt. Auch ist der Platzbedarf geringer als bei zwei Einzelmaschinen. Schließlich ist auch der Energiebedarf für beide Spritzgußformen im wesentlichen praktisch gleich groß wie für eine herkömmliche. Trotz des insgesamt verringerten Aufwandes weist die erfindungsgemäße Spritzpresse eine hohe Flexibilität insbesondere bezüglich wechselnder, unterschiedlicher Spritzlinge auf, so daß man sie sowohl für Kleinserien als auch für Großserien rationell einsetzen kann.

Alle in der Beschreibung, den Ansprüchen und der Zeichnung dargestellten Merkmale können sowohl einzeln als auch in beliebiger Kombination miteinander erfindungswesentlich sein-

- Ansprüche -

PATENTANWÄLTE
DIPL.-ING. H. SCHMITT
DIPL.-ING. W. MAUCHER

15

78 FREIBURG i.BR. 22. Nov. 1983
LREIKÖNIG.
TELEFON: (0761) 70773
70774

0116132

Firma
Pharma-Gummi
Wimmer West GmbH
Stolberger Straße 21 - 27
5180 Eschweiler

UNSERE AKTE · BITTE STETS ANGEBEN!

E 83 409 S

Spritzpresse und Verfahren zum Herstellen von Spritzgußteilen

Patentansprüche

1. Spritzpresse mit Formträgern für eine schließbare Spritzgußform sowie einer Zuführeinrichtung und einem Verteilerraum od. dgl. für Spritzmaterial, wobei die Spritzpresse zur Verarbeitung von plastischen Spritzmassen, insbesondere aus vulkanisierbarem Material, sowie vorzugsweise zur Herstellung von einer Vielzahl von gleichen Teilen dient, d a d u r c h  g e k e n n z e i c h - n e t , daß die Spritzpresse (1) Formträger (2, 3) für zwei schließbare Spritzgußformen (2 a, 3 a) mit einer dazwischen befindlichen, gemeinsamen Zuführeinrichtung u. dgl. (4, 5) aufweist.

2. Spritzpresse nach Anspruch 1, dadurch gekennzeichnet, daß der zwischen den beiden gegeneinander arbeitenden Spritzgußformen (2 a, 3 a) angeordnete Angußblock (5) od. dgl. feststehend und die Formträger (2, 3) mit den Spritzgußformen (2 a, 3 a) dazu bewegbar sind.

3. Spritzpresse nach Anspruch 1 oder 2, dadurch ge-

kennzeichnet, daß die beiden beweglichen Formträger (2, 3) auf einer gemeinsamen Längsführung (8) gelagert sind, wobei diese selbst in Führungsrichtung verschiebbar ist und an einem Ende fest mit dem einen Formträger (3) und über wenigstens einen Hubzylinder (9, 10) od. dgl. Hubeinrichtung mit dem anderen Formträger (2) in Verbindung steht.

4. Spritzpresse nach Anspruch 3, dadurch gekennzeichnet, daß die Längsführung (8) längsverschieblich beim feststehenden Angußblock (5) gelagert ist, vorzugsweise innerhalb des feststehenden Angußblockes.

5. Spritzpresse nach Anspruch 3 oder 4, dadurch gekennzeichnet, daß die Längsführung (8) wenigstens zwei, vorzugsweise vier Führungsstangen (23) aufweist, die beim Angußblock (5) und dgl. vorzugsweise in Führungsbuchsen (20) sowie zweckmäßigerweise an ihren Endbereichen insbesondere mittels Stützlagern (12, 13) gelagert sind.

6. Spritzpresse nach einem der Ansprüche 3 bis 5, dadurch gekennzeichnet, daß die mit dem auf der Längsführung (8) verschiebbaren Formträger (2) verbundene Hubeinrichtung (9; 10) mit ihrem anderen Ende an einem fest mit der Längsführung (8) verbundenen Widerlager (11) angreift.

7. Spritzpresse nach Anspruch 6, dadurch gekennzeichnet, daß einerseits das Widerlager (11) und andererseits der Formträger (3), die beide fest mit der Längsführung (8) verbunden sind, die Stützlager (12, 13) aufweisen und daß deren Längsverschiebeweg (l) vorzugsweise etwa gleich ist.

8. Spritzpresse nach einem der Ansprüche 1 bis 7, dadurch gekennzeichnet, daß der größtmögliche Öffnungsabstand (a) der Formträger (2, 3) von ihren beim Angußblock (5) angeordneten Angußplatten (6, 7) etwa gleich dem möglichen Längsverschiebungsweg (1) bei den Stützlagern (12, 13) ist.

9. Spritzpresse nach einem der Ansprüche 1 bis 8, dadurch gekennzeichnet, daß für den verschiebbar auf der Längsführung (8) gelagerten Formträger (2) ein dessen Öffnungsweg begrenzender Öffnungs-Anschlag (14) vorgesehen ist.

10. Spritzpresse nach einem der Ansprüche 1 bis 9, dadurch gekennzeichnet, daß die Hubeinrichtung eine zweckmäßigerweise hydraulische Schnellvorschubeinrichtung (9) sowie eine insbesondere einen kurzen Arbeitshub aufweisende, vorzugsweise hydraulische Hochdruckvorschubeinrichtung (10) aufweist.

11. Spritzpresse nach Anspruch 10, dadurch gekennzeichnet, daß zum Durchführen des Spritzvorganges parallel zur Schnellvorschubeinrichtung (9) ein einschwenkbarer Widerlagerblock (16) zur Abstützung der Hochdruck-Vorschubeinrichtung (10) vorgesehen ist.

12. Spritzpresse nach Anspruch 10 oder 11, dadurch gekennzeichnet, daß für das Verschieben der beiden Formträger (2, 3) von ihrer Offenstellung bis zumindest in die Nähe ihrer Schließstellung der bzw. die am Widerlager (11) einerseits sowie an dem relativ zur Führung verschiebbaren Formträger andererseits angreifende(n) Schnellvorschubeinrichtung(en) (9) einen Arbeitshub aufweist, der mindestens etwa doppelt so groß ist wie der größtmögliche Öffnungsabstand (a) der Formträger (2, 3) von ihren am Angußblock (5) angeordneten Angußplatten (6, 7).

13. Spritzpresse insbesondere nach einem der Ansprüche 1 und 3 bis 12, dadurch gekennzeichnet, daß der eine Formträger (103) fest mit dem Maschinengestell (24 a) od. dgl. verbunden und der andere Formträger (102) sowie der dazwischen befindliche Angußblock (105) u. dgl. relativ zu dem festen Formträger (103) verschiebbar sind (Fig. 12 und 13).

14. Spritzpresse nach einem der Ansprüche 1 bis 13, dadurch gekennzeichnet, daß die Formenträger mittels der Schnellvorschubeinrichtung(en) (9) in eine nahe der Einspritzstellung befindliche Dichtstellung verschiebbar sind und daß für diese Dichtstellung vorzugsweise verstellbare Anschläge (17, 17 a) vorgesehen sind (Fig. 6).

15. Spritzpresse nach Anspruch 14, dadurch gekennzeichnet, daß für die Anschläge (17, 17 a) in Dichtstellung Kolben (18, 18 a) eines Anschlagzylinders (19) vorgesehen sind, die sich in Anschlagstellung jeweils an den Enden des Anschlagzylinders befinden und vorzugsweise mittels Hydraulikmedium beaufschlagt sind, und daß für das vollständige Schließen sowie Einspritzen bei den Spritzgußformen das Hydraulikmedium od. dgl. entfernbar ist (Fig. 7).

16. Spritzpresse nach einem der Ansprüche 1 bis 15, dadurch gekennzeichnet, daß zur Temperierung der innerhalb des Angußblockes (5) befindlichen Materialzuführkanäle im Verteilerraum Temperierkanäle (29) vorgesehen sind (Fig. 10).

17. Spritzpresse nach einem der Ansprüche 1 bis 16, dadurch gekennzeichnet, daß die Führungsbuchsen (20) beim oder vorzugsweise im Angußblock od. dgl. für die Führungsstangen thermische Isolierungen aufweisen (Fig. 2 und 11).

18. Spritzpresse insbesondere nach einem der Ansprüche 1 und 3 bis 17, dadurch gekennzeichnet, daß der Angußblock (205) od. dgl. feststehend und die beiden Formträger (202, 203) dazu verschiebbar angeordnet sind, und daß vorzugsweise für jede Spritzgußform eine separate, insbesondere hydraulische Schließeinheit (210, 211) vorgesehen ist (Fig. 14 und 15).

19. Spritzpresse nach einem der Ansprüche 1 bis 18, dadurch gekennzeichnet, daß die Einspritzeinheit (26) zu dem Verteilerraum od. dgl. bei dem Angußblock (5) auf der Rückseite der Maschine angeordnet ist (Fig. 2, 10 und 11).

20. Spritzpresse nach einem der Ansprüche 1 bis 19, dadurch gekennzeichnet, daß eine Doppel-Endformvorrichtung (21) etwa oberhalb des Angußblockes (5) od. dgl. vorgesehen ist und daß oberhalb und unterhalt der Maschine im Bereich zwischen den Angußplatten und den zugehörigen Formträgern in Offenstellung Freiräume (22, 22 a) insbesondere für Auswerfer- bzw. Auffangeinrichtungen vorgesehen sind (Fig. 1).

21. Spritzpresse nach einem der Ansprüche 1 bis 20, dadurch gekennzeichnet, daß die Materialzuführung fest am gegebenenfalls verfahrbaren Angußblock angebracht ist.

22. Spritzpresse nach einem der Ansprüche 1 bis 20, dadurch gekennzeichnet, daß die Einspritzeinheit (26) justierbar am Maschinengestell angebracht ist und eine Kupplungsstelle für einen intermittierenden Anschluß an den Angußblock aufweist.

23. Verfahren zum Herstellen von Spritzgußteilen, bei dem die plastische Spritzmasse für einen Spritzvorgang mengenmäßig dosiert sowie in einem fließfähigen Zustand bereitgehalten wird und nach einem ersten Schließen (Dichtstellung) gegebenenfalls ein Evakuieren einer Form und anschließend ein Einspritzen der Spritzmasse durch Verfahren der Form in die Endstellung erfolgt, vorzugsweise zum Herstellen einer Vielzahl von gleichen Teilen, wobei dieses Verfahren insbesondere mit einer Spritzpresse gemäß Anspruch 1 bis 22 erfolgt, dadurch gekennzeichnet, daß bei jedem Arbeitstakt zumindest die Spritzmasse für zwei Spritzformen bereitgestellt und dann mengenmäßig entsprechend dem Formvolumen aufgeteilt in entgegengesetzten Richtungen in die Formen eingespritzt wird.

- Zusammenfassung -

Fig. 3

Fig. 2

Fig. 1

1/9

0116132

*Fig. 4*

Fig. 5

**Fig. 6**

# Fig. 7

**Fig. 9**

**Fig. 8**

0116132

**Fig. 10**

**Fig. 11**

111

105

100

102

103

24a

**Fig. 12**

111

102

105

103

100

**Fig. 13**

*Fig. 14*

211    202    205    203    210

200

211    202    200    203    210

205

*Fig. 15*

0116132

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | US-A-3 533 137 (A. MICHELSON) * Spalte 3, Zeile 19 - Spalte 4, Zeile 30; Figuren 3, 4 * | 1-6 | B 29 F 1/06 |
| | --- | | |
| A | CH-A- 443 659 (KUNSTSTOFFMASCHINEN AG STANSSTAD) * Spalte 1, Zeile 36 - Spalte 2, Zeile 11 * | 10 | |
| | --- | | |
| A | DE-A-2 700 881 (INSTITUT PO METALOSNANIE I TECHNOLOGIA NA METALITE) * Seite 4, Zeilen 18-21; Figur 2 * | 11 | |
| | ----- | | |

**RECHERCHIERTE SACHGEBIETE (Int. Cl. ³)**

B 29 F 1/00
B 29 F 1/06
B 29 H 3/08

Der vorliegende Recherchenbericht wurde für alle Patentansprüche erstellt.

| Recherchenort BERLIN | Abschlußdatum der Recherche 11-04-1984 | Prüfer VAN DER MEER J. |
|---|---|---|